# EUROPEAN PATENT SPECIFICATION

(11) **EP 1 204 357 B1**
(45) Date of publication and mention of the grant of the patent: **24.09.2003**
(21) Application number: 00953280.5
(22) Date of filing: 04.08.2000
(51) Int. Cl.: A47J 47/01, A47J 9/00, A45D 40/02

(54) **DISPENSER FOR SOFT FLOWABLE MATERIALS**
VERTEILER FÜR LEICHT FLÜSSIGEN MATERIALEN
DISTRIBUTEUR DE MATIERES COULANTES TENDRES

(30) Priority: 06.08.1999 GB 9918453
(43) Date of publication of application: 15.05.2002
(73) Proprietor: Eldred, Stephen Terence, Solihull West Midlands B92 8AX (GB); Fitzpatrick, Colin, Selly Oak, Birmingham B29 4DR (GB)
(72) Inventor: ELDRED, Stephen, Terence, Solihull, West Midlands B92 8AX (GB); FITZPATRICK, Colin, Birmingham B29 4DR (GB); LEVESLEY, Simon, Lichfield, Staffordshire WS13 8NR (GB)
(74) Representative: Makovski, Priscilla Mary
(86) International application number: GB0003009
(87) International publication number: WO01010277

(56) References cited:
- EP-A- 0 350 661
- WO-A-98/42243
- FR-A- 2 607 370
- US-A- 2 250 876

## Description

This invention relates to a dispenser for soft flowable materials such as cosmetic creams or edible food products.

WO 98/42243 shows such a dispenser, which has relatively rotatable exterior and interior body parts, the interior body part forming a discharge chamber with an orifice, from which material can be dispensed by movement of a plunger. The plunger is driven by a nut ring arranged between the body parts. The nut ring rotates with the external body part and has a screw-threaded engagement with the internal body part. Rotation of the external body part rotates the nut ring and moves it axially along the internal body part to drive the plunger. In this dispenser the screw thread on the internal body part is of substantial length, and the parts are relatively complex and expensive to make. It is possible to refill the discharge chamber, but the plunger has to be wound down first. Furthermore, as the orifice is defined on the internal body part it can be difficult to keep clean without dismantling the whole dispenser. Hygiene and prevention of contamination is of great importance where the dispenser is used for cosmetic creams or food.

EP 0 350 661 discloses a dispensing container for viscous substances defined by an internally threaded sleeve member having a top and a base portion adapted such that the sleeve member and base portion can rotate relative to each other. A threaded plunger is received within the sleeve member where, upon relative rotation of the base and sleeve member, the plunger is drawn up the sleeve thread thereby dispensing the substance in the container through an orifice in the top.

According to the present invention, a dispenser for soft flowable materials comprises a base, a body mounted on the base for relative rotation about an axis, container means for the material arranged in the body and forming a discharge chamber with a discharge orifice and plunger means adapted to be moved axially relative to the discharge chamber by operating means, the operating means comprising at least one operating finger rotatable with the body and having a first end engaging in helical groove means in an axial end face of the base and a second end engaging the plunger, such that rotation of the body relative to the base moves the or each operating finger in the helical groove means to change the effective axial length of the finger to move the plunger axially.

The dispenser according to the invention is less complex and expensive to make, as there are fewer parts, and the substantial screw thread on the internal body part is replaced by the helical groove means on the base.

In one arrangement, the or each operating finger may be arranged so as to easily be moved back in the helical groove means by pushing the plunger towards the base, rather than winding it down.

Preferably the body has flanges defining channel means for location of the operating finger or fingers, to ensure that the finger or fingers rotate with the body.

Preferably two operating fingers are provided. The fingers are diametrically opposed and cross over, in order to keep the operating force acting on the plunger symmetrical. Both fingers are located by the same channel in the body. Conveniently each operating finger has a rounded projection at its first end by which it engages in the helical groove means.

The helical groove means preferably comprises a single helical groove in which all the operating fingers engage. The axial end face of the base may be conical. This enables the diameter of the base and the length of the fingers to be reduced, while maintaining the range of axial movement of the plunger.

Preferably the container means is removable. This ensures easier cleaning of the discharge orifice. Most preferably the container means is disposable, as each container means has its own orifice, preventing contamination. The container means may have a connecting formation to attach it firmly to the body. The connecting formation attaches to an upstanding cylindrical flange on the body, at its end remote from the base. The connecting formation may comprise a lip fitting over the cylindrical flange and sealing to it. Alternatively it may comprise a bayonet fitting with projections on the container means co-operating with suitable slots in the body. In a further embodiment the container means has no connecting formation, but is instead retained in the body by an annular retaining member detachably secured to the cylindrical flange of the body.

Preferably all the parts are moulded from plastics. A cover may be provided to fit over the cylindrical flange and protect the orifice against dirt. The annular retaining member may form part of the cover. Another part of the cover may then be provided on the container means.

The container means itself may form another aspect of the invention. Thus, a container means for use with a dispenser according to the invention comprises a side wall, a base for receiving a plunger, a top member having a projection surrounding an orifice and including a cover adapted to fit sealingly over the projection. The projection may form the perimeter of a dished surface having the orifice.

Some embodiments of the invention are described by way of example in the accompanying drawings, in which:
**Figure 1** is an exploded perspective view showing the component parts of the dispenser;
**Figure 2** is a sectional view of the assembled dispenser;
**Figure 3** is similar to Figure 2, but shows a modification;
**Figure 4** is similar to Figure 1 but shows a modified dispenser;
**Figure 5** is a sectional view of the assembled dispenser of Figure 1 when full;
**Figure 6** is similar to Figure 5 but shows the dispenser empty; and
**Figure 7** is similar to Figure 5 but shows a modified dispenser.

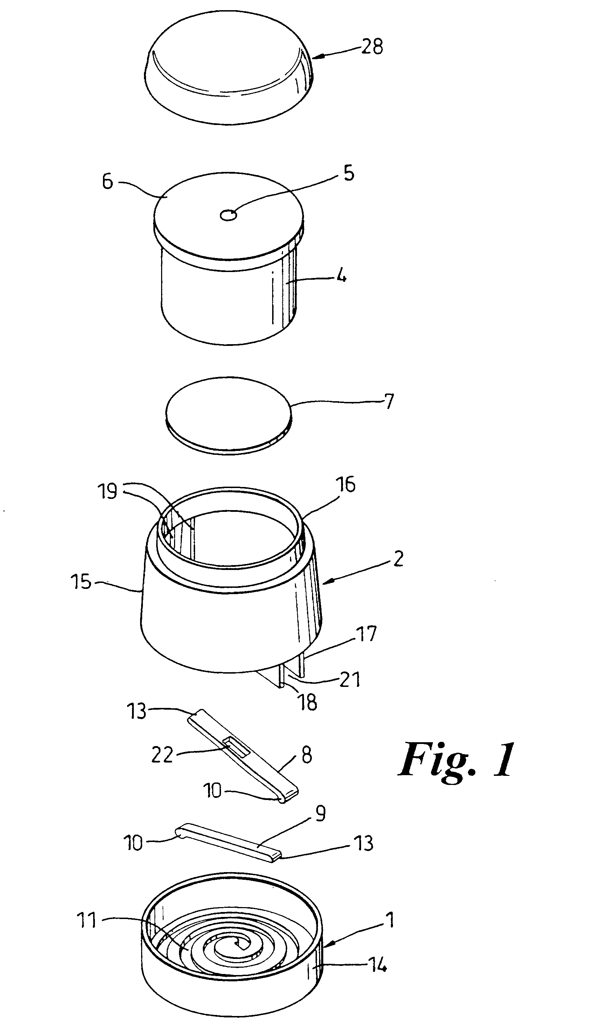

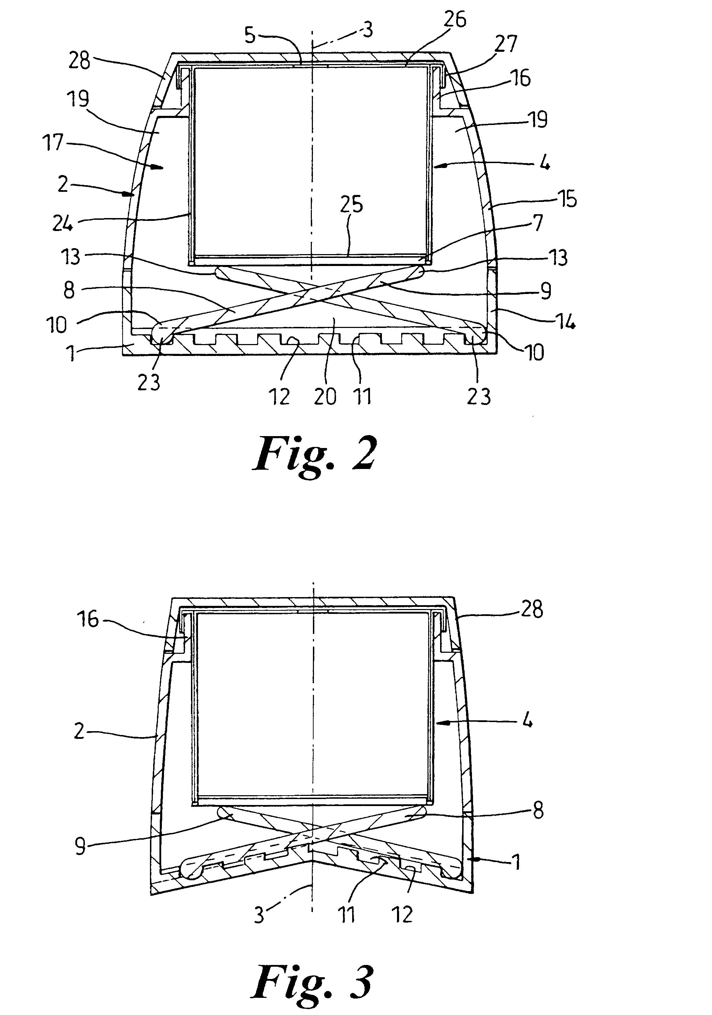

The dispenser shown in Figures 1 and 2 is for soft flowable materials, such as cosmetic creams or food products and the like.

The dispenser of Figures 1 and 2 has a base 1, and a body 2 mounted on the base 1 for relative rotation about an axis 3. A container 4 in the body 2 holds the material to be dispensed, the container 4 having a discharge orifice 5 on its upper surface 6. A plunger 7 moves axially relative to the container 4 to dispense the material through the orifice 5. Movement of the plunger 7 is controlled by operating means comprising two operating fingers 8, 9 rotatable with the body 2. Each finger 8, 9 has a first end 10 engaging in a helical groove 11 in an internal axial end face 12 of base 1, and a second end 13 engaging the plunger 7.

The base 1 is a unitary moulding of plastics material having a cylindrical wall and with the helical groove 11 on its internal axial end face 12. The body 2 is also a unitary plastics moulding cylindrical wall 15 of stepped outline. The wall 15 has an upstanding cylindrical flange 16 at its end remote from the base 1, to which the container 4 is attached. The body 2 also has a pair of parallel chordal flanges 17, 18. Each flange 17, 18 is of substantially U-shape, having upstanding arms 19 starting at the step defining the flange 16 and connected by a bottom member 20, which projects below the bottom of the wall 14, and into the base 1. The flanges 17, 18 define a channel 21 for receiving the operating fingers 8, 9 to ensure that they rotate with the body 2. The flanges 17, 18 also assist in locating the container 4.

The operating fingers 8, 9 are diametrically opposed, and cross over. The finger 8 has a slot 22 through which the finger 9 passes. Each first end 10 has a rounded projection 23 by which it engages in the helical groove 11. Each second end 3 engages the plunger 7, which is a disc.

The container 4 also has a cylindrical wall 24, closed by a circular base 25, which receives the plunger 7 and slides in the wall 24, and by a top member 26 which contains the orifice 5. The top member 26 includes a connecting formation comprising a lip 27 which overhangs the wall 24, and fits onto the upstanding flange 14 on the body 2. The container 4 is firmly attached to the body 2 by the lip 27, which seals against the flange 14 in a manner similar to that on a food container.

The dispenser is completed by a cover 28 which fits over the container 4.

Figure 2 shows the dispenser where the container is full, and the ends 10 of the operating fingers 8, 9 are in the outermost part of the groove 11. In order to dispense the material, the cover 28 is removed and the body 2 rotated relative to the base 1. The operating fingers 8, 9 move round with the body 2, and the ends 10 move circumferentially in the groove 11, so that the ends 10 move radially inwards. This effectively pivots each finger 8, 9 about its end 10, to increase its effective axial length and push the plunger 7 into the container 4, so that material is forced out of the orifice 5 by movement of the base 25.

As dispensing continues the fingers 8, 9 move radially inwardly in the groove 11, and the plunger 7 moves up. When the container 4 is empty the plunger 7 is at the top of the container, and the first ends 10 of the fingers 8, 9 are near the radially inner end of the groove 11. In this position the fingers 8, 9 may be nearly vertical. It will be appreciated that the size of the slot 22 is chosen to allow the appropriate range of movement of the fingers 8, 9.

The empty container 4 can then be removed, and a replacement inserted. Insertion of the new container 4 pushes the plunger 7 down, which moves the fingers 8, 9 back out along the groove 11 to their starting position. Some rotation of body 2 may be needed to assist this.

As each container 4 has its own orifice 5 there can be no risk of contamination by a previous product.

The embodiment shown in Figure 3 is a modification of that of Figures 1 and 2, and corresponding reference numerals have been applied to corresponding parts.

In Figure 3 the end face 12 of the base 1 is conical, with its apex pointing upwards. The groove 11 is formed on the conical surface. It will be appreciated that this enable the diameter of the dispenser and the length of the fingers 8, 9 to be reduced in comparison with Figure 2, as the conical surface effectively increases the length of the fingers 8, 9 as the first ends 10 move upwardly as they move radially inwardly. The construction and operation of Figure 3 is otherwise the same as that of Figure 2.

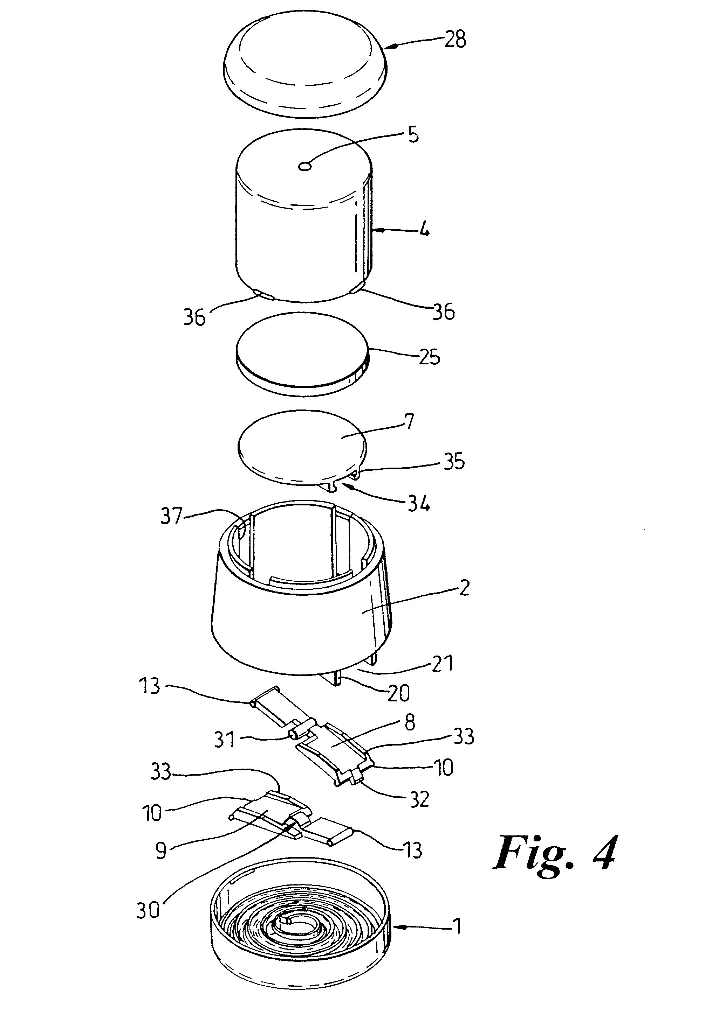

The embodiment of Figures 4 to 6 shows a modification of that of Figures 1 and 3, and corresponding reference numerals have been applied to corresponding parts.

In Figures 4 to 6 the operating fingers 8, 9 are modified, with the slot 22 being replaced by an aperture 30 on the finger 9 in which a pivot pin 31 on the finger 8 is received. This forms a defined pivot point for the fingers 8, 9. The ends of the arms 8, 9 are also modified. Thus, the first ends 10 have an angled projection 32 for engagement in the groove 11. The ends 10 of the arms 8, 9 are also strengthened by flanges 33. The ends 13 of the arms are rounded, and engage in a channel 34 defined between flanges 35 formed on the underside of the plunger 7. The channel 34 ensures proper location of the ends 13.

The connecting formation between the container 4 and the body 2 is also modified, to be of the bayonet type. The lip 27 is omitted at the top of the container 4, and instead the bottom of the wall 24 has four outwardly-projecting formations 36. The body 2 has an internal wall 2a in which are formed L-shaped slots 37, corresponding to the formations 36. Each slot 37 has an axial part 38 and a circumferential part 39. The container 4 can therefore be inserted into the body 2 by aligning the formations 36 with the slots 37, sliding the container axially and then circumferentially to lock it in place. The flanges 17, 18 are also modified, with the upstanding arms 19 being omitted but the bottom members 20 retained to ensure that the fingers 8, 9 rotate with the body 2. The base of the body 2 has an inturned lip 40 to provide a better bearing surface for relative rotation of the body 2 and the base 1.

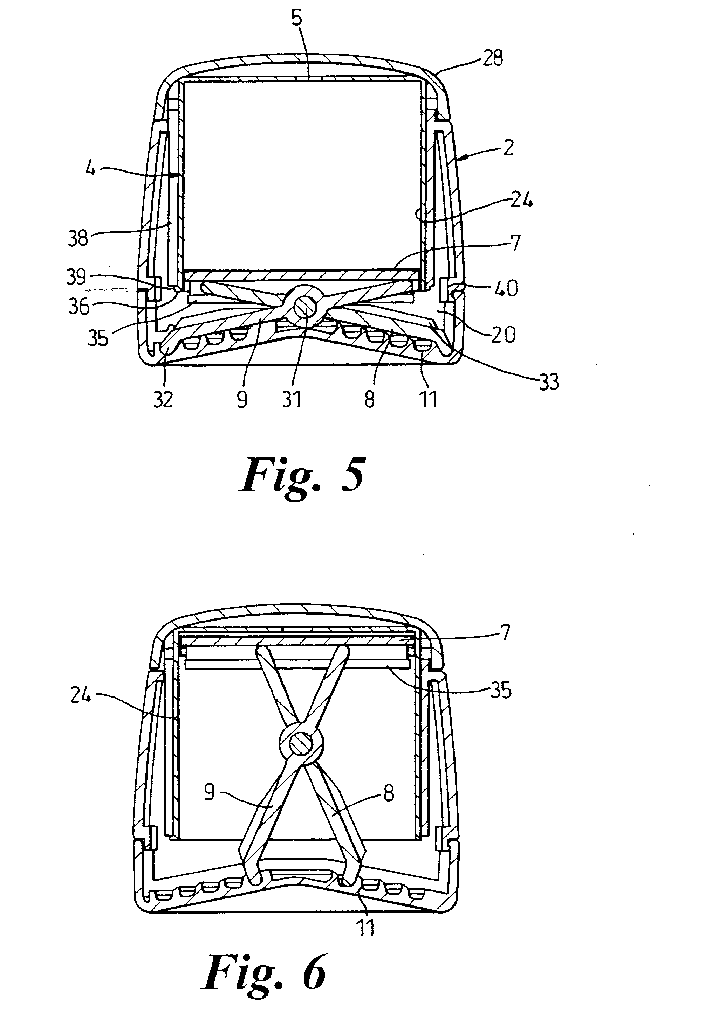

Insertion of the container 4 into the body 2 is as described above, and removal is performed by turning the container back and then lifting it out. Operation of the dispenser is the same as that described in relation to Figures 1 to 3. Figure 5 shows the dispenser with a full container 4, while Figure 6 shows the dispenser with an empty container 4.

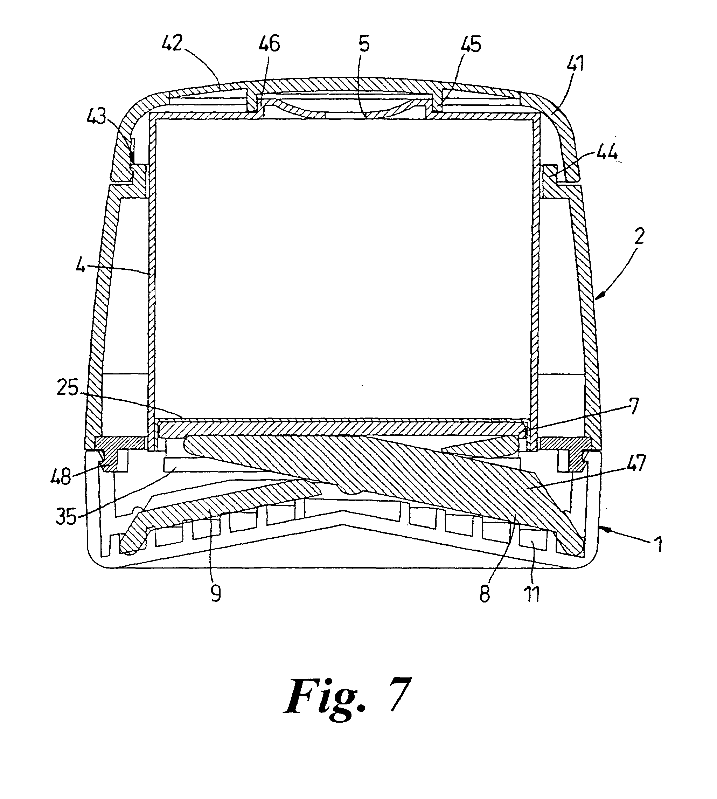

Figure 7 is a modification of the embodiment of Figures 4 to 6, and corresponding reference numerals have been applied to corresponding parts. In Figure 7 the major change is in the retention of the container 4. The internal wall 2a of the body 2 with the slots 37 is omitted, as are the formations 36 on the container 4. The cover 28 is in two concentric parts 41, 42. The outer part 41, which is annular, has a screw-threaded connection 43 with an upstanding flange 44 on the top of the body 2. The outer part 41 therefore retains the container 4 on the plunger 7. The inner part 42 is circular, and has a depending annular flange 45. This fits sealingly over an upstanding projection 46 on the container 4. The orifice 5 is provided in the projection 46. The top of the projection 46 is dished to enable the dispensed material to be removed easily.

The operating fingers 8, 9 have extra flanges 47 for strength. A separate member 48 connects the container 4 and the base 2 for relative rotation.

For use, the outer cover part 41 is supplied with the body 2 and the base 1, while the inner cover part 42 is supplied with the container 4. The inner part 42 is removed to dispense the material, and the outer part 41 has a depression (not shown) at one point to allow its easy removal. For dispensing the material the body 2 is rotated relative to the base 1 in the same way as the other embodiments when the container 4 is empty the outer cover part 41 is removed by rotation, and the container 4 with the inner cover part 42 are removed for disposal. A replacement container can then be inserted, and the outer cover part 41 replaced to retain it.

## Claims

1. A dispenser for soft flowable materials comprising a base (1), a body (2) mounted on the base (1) for relative rotation about an axis (3), container means (4) for the material arranged in the body (2) and forming a discharge chamber with a discharge orifice (5) and plunger means (7) adapted to be moved axially relative to the discharge chamber by operating means, **characterised in that** the operating means comprises at least one operating finger (8, 9) rotatable with the body (2) and having a first end (10) engaging in helical groove means (11) in an axial end face (12) of the base (1) and a second end (13) engaging the plunger means (7), such that rotation of the body (2) relative to the base (1) moves the or each operating finger (8, 9) in the helical groove means (11) to change the effective axial length of the finger (8, 9) to move the plunger means (7) axially.

2. A dispenser as claimed in claim 1, **characterised in that** the or each operating finger (8, 9) is arranged so as to be moved back in the helical groove means (11) by pushing the plunger means (7) towards the base (1).

3. A dispenser as claimed in claim 1 or claim 2, **characterised in that** the body (2) has flanges (17, 18) defining channel means (21) for location of the or each operating finger (8, 9).

4. A dispenser as claimed in any preceding claim, **characterised in that** two operating fingers (8, 9) are provided.

5. A dispenser as claimed in claim 4, **characterised in that** the fingers (8, 9) are diametrically opposed and cross over.

6. A dispenser as claimed in claim 3 and claim 5, **characterised in that** the two fingers (8, 9) are located by the same channel means (21) in the body.

7. A dispenser as claimed in any preceding claim, **characterised in that** the or each operating finger (8, 9) has a rounded projection (23) at its first end (10) by which it engages in the helical groove means (11).

8. A dispenser as claimed in any preceding claim, **characterised in that** the helical groove means (11) comprises a single helical groove in which the or all the operating fingers (8, 9) engage.

9. A dispenser as claimed in any preceding claim, **characterised in that** the axial end face (12) of the base (1) is conical.

10. A dispenser as claimed in any preceding claim, **characterised in that** the container means (4) is removable.

11. A dispenser as claimed in claim 10, **characterised in that** the container means (4) is disposable.

12. A dispenser as claimed in any preceding claim, **characterised in that** the container means (4) has a connecting formation (27) to attach it to an upstanding cylindrical flange (14) on the body (2)

13. A dispenser as claimed in claim 12 **characterised in that** the connecting formation comprises a lip (27) fitting over the cylindrical flange (14) and sealing to it.

14. A dispenser as claimed in claim 12, **characterised in that** the connecting formation comprises a bayonet fitting having projections on the container means co-operating with slots in the body (2).

15. A dispenser as claimed in any of claims 1 to 11, **characterised in that** the container means (4) is retained in the body (2) by an annular retaining member (41) detachably secured to the cylindrical flange (44) of the body (2).

16. A dispenser as claimed in any preceding claim, **characterised in that** a cover (28) fits over the cylindrical flange (16, 44).

17. A dispenser as claimed in claim 15 and claim 16, **characterised in that** the annular retaining member (41) forms part of the cover (28).

18. A container means for use with a dispenser according to any preceding claim, comprising a side wall (24), a base (25) for receiving a plunger (7), a top member (26) having a projection (46) surrounding an orifice (5) and including a cover (42) adapted to fit sealingly over the projection (46).

19. A container means as claimed in claim 18 for use with a dispenser according to any of claims 1 to 17 in which the projection (46) forms the perimeter of a dished surface having the orifice (5).

## Patentansprüche

1. Spender für weiche, rieselfähige Materialien, umfassend eine Basis (1), einen an der Basis (1) für eine Relativdrehung bezüglich einer Achse (3) gelagerten Körper (2), eine Behältereinrichtung (4) für das Material, angeordnet in dem Körper (2) und eine Austragkammer mit einer Austragöffnung (5) bildend, und eine Kolbeneinrichtung (7), ausgebildet zur axialen Bewegung in Bezug auf die Austragkammer mit Hilfe einer Betätigungseinrichtung, **dadurch gekennzeichnet, daß** die Betätigungseinrichtung mindestens einen Betätigungsfinger (8, 9) aufweist, der mit dem Körper (2) drehbar ist und mit einem ersten Ende (10) mit einer spiralförmigen Nutanordnung (11) in einer axialen Stirnfläche (12) der Basis (1) zusammenwirkt, und mit einem zweiten Ende (13) an der Kolbeneinrichtung (7) angreift, so daß eine Drehung des Körpers (2) gegenüber der Basis (1) den oder jeden Betätigungsfinger (8, 9) in der spiralförmigen Nutanordnung (11) bewegt, um die effektive axiale Länge des Fingers (8, 9) zu ändern und so die Kolbeneinrichtung (7) axial zu bewegen.

2. Spender nach Anspruch 1, **dadurch gekennzeichnet, daß** der oder jeder Betätigungsfinger (8, 9) so angeordnet ist, daß er in der spiralförmigen Nutanordnung (2) durch Drücken der Kolbeneinrichtung (7) in Richtung der Basis (1) zurückbewegt wird.

3. Spender nach Anspruch 1 oder 2, **dadurch gekennzeichnet, daß** der Körper (2) Flansche (17, 18) besitzt, die eine Kanalanordnung (21) zur Plazierung des oder jedes Betätigungsfingers (8, 9) definiert.

4. Spender nach einem vorhergehenden Anspruch, **dadurch gekennzeichnet, daß** zwei Betätigungsfinger (8, 9) vorhanden sind.

5. Spender nach Anspruch 4, **dadurch gekennzeichnet, daß** die Finger (8, 9) diametral gegenüberliegen und einander kreuzen.

6. Spender nach Anspruch 3 und Anspruch 5, **dadurch gekennzeichnet, daß** die zwei Finger (8, 9) von derselben Kanalanordnung (21) in dem Körper positioniert werden.

7. Spender nach einem vorhergehenden Anspruch, **dadurch gekennzeichnet, daß** der oder jeder Betätigungsfinger (8, 9) einen abgerundeten Vorsprung (23) an seinem ersten Ende (10) aufweist, mit dem er in die spiralförmige Nutanordnung (11) eingreift.

8. Spender nach einem vorhergehenden Anspruch, **dadurch gekennzeichnet, daß** die spiralförmige Nutanordnung eine einzelne Spiralnut umfaßt, in der der oder sämtliche Betätigungsfinger (8, 9) eingreift/eingreifen.

9. Spender nach einem vorhergehenden Anspruch, **dadurch gekennzeichnet, daß** die axiale Stirnfläche (12) der Basis (1) konisch ist.

10. Spender nach einem vorhergehenden Anspruch, **dadurch gekennzeichnet, daß** die Behälteranordnung (4) herausnehmbar ist.

11. Spender nach Anspruch 10, **dadurch gekennzeichnet, daß** die Behälteranordnung (4) wegwerfbar ist.

12. Spender nach einem vorhergehenden Anspruch, **dadurch gekennzeichnet, daß** die Behälteranordnung (4) eine Verbindungsstruktur (27) aufweist, um sie an einem aufrecht stehenden zylindrischen Flansch (14) des Körpers (2) zu befestigen.

13. Spender nach Anspruch 12, **dadurch gekennzeichnet, daß** die Verbindungsstruktur eine Lippe (27) aufweist, die über den zylindrischen Flansch (14) paßt und ihn abdichtet.

14. Spender nach Anspruch 12, **dadurch gekennzeichnet, daß** die Verbindungsstruktur einen Bayonetverschluß mit Vorsprüngen an der Behälteranordnung aufweist, die mit Schlitzen in dem Körper (2) zusammenwirken.

15. Spender nach einem der Ansprüche 1 bis 11, **dadurch gekennzeichnet, daß** die Behälteranordnung (4) in dem Körper (2) von einem ringförmigen Halteelement (41) gehalten wird, welches lösbar an dem zylindrischen Flansch (44) des Körpers (2) angebracht ist.

16. Spender nach einem vorhergehenden Anspruch, **dadurch gekennzeichnet, daß** über den zylindrischen Flansch (16, 44) ein Deckel (28) paßt.

17. Spender nach Anspruch 15 und Anspruch 16, **dadurch gekennzeichnet, daß** das ringförmige Halteelement (41) einen Teil des Deckels (28) bildet.

18. Behälteranordnung zur Verwendung in einem Spender gemäß einem vorhergehenden Anspruch, umfassend eine Seitenwand (24), eine Basis (25) zur Aufnahme eines Kolbens (7), ein oberes Element (26) mit einem Vorsprung (46), der eine Öffnung (5) umgibt, und mit einem Deckel (42), der abdichtend auf dem Vorsprung (46) sitzt.

19. Behälteranordnung nach Anspruch 18 zur Verwendung bei einem Spender nach einem der Ansprüche 1 bis 17, wobei der Vorsprung (46) den Umfang einer schüsselförmigen, die Öffnung (5) aufweisenden Fläche bildet.

## Revendications

1. Distributeur pour matériaux mous pouvant s'écouler, comportant une base (1), un corps (2) monté sur la base (1) pour une rotation relative autour d'un axe (3), des moyens formant conteneur (4) destinés au matériau agencé dans le corps (2) et formant une chambre de décharge ayant un orifice de décharge (5) et des moyens formant plongeur (7) adaptés pour être déplacés axialement par rapport à la chambre de décharge par des moyens d'actionnement, **caractérisé en ce que** les moyens d'actionnement comportent au moins un doigt d'actionnement (8, 9) pouvant tourner avec le corps (2), et ayant une première extrémité (10) venant en prise dans des moyens formant gorge hélicoïdale (11) situés dans une face d'extrémité axiale (12) de la base (1), et une seconde extrémité (13) venant en prise avec les moyens formant plongeur (7), de sorte qu'une rotation du corps (2) par rapport à la base (1) déplace le ou chaque doigt d'actionnement (8, 9) dans les moyens formant gorge hélicoïdale (11) pour changer la longueur axiale effective du doigt (8, 9) afin de déplacer axialement les moyens formant plongeur (7).

2. Distributeur selon la revendication 1, **caractérisé en ce que** le ou chaque doigt d'actionnement (8, 9) est agencé de manière à être déplacé en retour dans les moyens formant gorge hélicoïdale (11) en poussant les moyens formant plongeur (7) vers la base (1).

3. Distributeur selon la revendication 1 ou 2, **caractérisé en ce que** le corps (2) a des rebords (17, 18) définissant des moyens formant canal (21) pour un positionnement du ou de chaque doigt d'actionnement (8, 9).

4. Distributeur selon l'une quelconque des revendications précédentes, **caractérisé en ce que** deux doigts d'actionnement (8, 9) sont fournis.

5. Distributeur selon la revendication 4, **caractérisé en ce que** les doigts (8, 9) sont diamétralement opposés et se croisent.

6. Distributeur selon les revendications 3 et 5, **caractérisé en ce que** les deux doigts (8, 9) sont positionnés par les mêmes moyens formant canal (21) dans le corps.

7. Distributeur selon l'une quelconque des revendications précédentes, **caractérisé en ce que** le ou chaque doigt d'actionnement (8, 9) a une saillie arrondie (23) au niveau de sa première extrémité (10), par l'intermédiaire de laquelle il vient en prise dans les moyens formant gorge hélicoïdale (11).

8. Distributeur selon l'une quelconque des revendications précédentes,
**caractérisé en ce que** les moyens formant gorge hélicoïdale (11) comportent une gorge hélicoïdale unique dans laquelle le ou tous les doigts d'actionnement (8, 9) viennent en prise.

9. Distributeur selon l'une quelconque des revendications précédentes, **caractérisé en ce que** la face d'extrémité axiale (12) de la base (1) est conique.

10. Distributeur selon l'une quelconque des revendications précédentes, **caractérisé en ce que** les moyens formant conteneur (4) sont amovibles.

11. Distributeur selon la revendication 10, **caractérisé en ce que** les moyens formant conteneur (4) sont jetables.

12. Distributeur selon l'une quelconque des revendications précédentes, **caractérisé en ce que** les moyens formant conteneur (4) ont une formation de connexion (27) destinée à les fixer sur un rebord cylindrique droit (14) situé sur le corps (2).

13. Distributeur selon la revendication 12, **caractérisé en ce que** la formation de connexion est une lèvre (27) s'agençant sur le rebord cylindrique (14), se scellant sur celui-ci.

14. Distributeur selon la revendication 12, **caractérisé en ce que** la formation de connexion est un agencement à baïonnette ayant des saillies situées sur les moyens formant conteneur coopérant avec des fentes situées sur le corps (2).

15. Distributeur selon l'une quelconque des revendications 1 à 11, **caractérisé en ce que** les moyens formant conteneur (4) sont retenus dans le corps (2) par un élément de retenue annulaire (41) fixé de manière détachable sur le rebord cylindrique (44) du corps (2).

16. Distributeur selon l'une quelconque des revendications précédentes, **caractérisé en ce qu'**un couvercle (28) s'agence sur le rebord cylindrique (16, 44).

17. Distributeur selon les revendications 15 et 16, **caractérisé en ce que** l'élément de retenue annulaire (41) forme une partie du couvercle (28).

18. Moyens formant conteneur destinés à être utilisés avec un distributeur selon l'une quelconque des revendications précédentes, comportant une paroi latérale (24), une base (25) pour recevoir un plongeur (7), un élément supérieur (26) ayant une saillie (46) entourant un orifice (5) et comportant un couvercle (42) adapté pour s'agencer de manière étanche sur la saillie (46).

19. Moyens formant conteneur selon la revendication 18 destinés à être utilisés avec un distributeur selon l'une quelconque des revendications 1 à 17, dans lesquels la saillie (46) forme le périmètre d'une surface emboutie comportant l'orifice (5).
